# EUROPEAN PATENT APPLICATION

(11) **EP 4 760 384 A1**
(43) Date of publication of application: **17.06.2026**
(21) Application number: 24858485.6
(22) Date of filing: 23.08.2024
(51) Int. Cl.: G02F 1/15

(54) **ELECTROCHROMIC DEVICE STRUCTURE**

(30) Priority: 25.08.2023 CN 202322304503 U
(71) Applicant: Suzhou Bearsunny Technologies Inc., Suzhou, Jiangsu 215211 (CN)
(72) Inventor: CHEN, Yeyue, Suzhou, Jiangsu 215211 (CN); ZHANG, Jing, Suzhou, Jiangsu 215211 (CN); JIANG, Yishan, Suzhou, Jiangsu 215211 (CN)
(74) Representative: Regimbeau
(86) International application number: PCT/CN2024/114346
(87) International publication number: WO 2025/044949

(57) **Abstract**

Provided is an electrochromic device structure, which relates to the field of electrochromism. The electrochromic device structure includes a first transparent base layer, a first transparent conductive layer, an electrochromic layer, an electrolyte layer, an ion storage layer, a second transparent conductive layer and a second transparent base layer. The first transparent base layer is a flexible substrate. The first transparent conductive layer is located on a top surface of the first transparent base layer. The electrochromic layer is located on a top surface of the first transparent conductive layer. The electrolyte layer is located on a top surface of the electrochromic layer. The ion storage layer is located on a top surface of the electrolyte layer. The second transparent conductive layer is located on a top surface of the ion storage layer. The second transparent base layer is located on a top surface of the second transparent conductive layer and is a flexible substrate. Using this solution can prepare a flexible device structure with bendability.

## Description

### CROSS-REFERENCE TO RELATED APPLICATION(S)

This application claims priority to Chinese Patent Application No. 202322304503.5 filed with the China National Intellectual Property Administration (CNIPA) on Aug. 25, 2023, the disclosure of which is incorporated herein by reference in its entirety.

### TECHNICAL FIELD

The present disclosure relates to the field of electrochromism and, in particular, to an electrochromic device structure.

### BACKGROUND

Electrochromism (EC) refers to the phenomenon where a material is subjected to oxidation or reduction under the action of an external electric field, resulting in a reversible change in light transmission or reflection of the material, which manifests as a reversible change in color and transparency in appearance. Electrochromic devices have shown promising application prospects in real life and have been widely applied to products such as electrochromic energy-saving smart windows, automotive rearview anti-glare mirrors, electrochromic displays, electrochromic memories, and electrochromic sunglasses. Electrochromic materials have broad application fields. It is believed that with the development of science and technology in the new century and the continuous in-depth research and exploration of electrochromic materials, electrochromic materials and devices are certain to achieve more popularized applications.

Existing electrochromic devices generally use rigid substrates, including rigid transparent/colored glass, and such rigid substrates lack bendability. Accordingly, there exists a demand for a flexible electrochromic device structure with bendability.

### SUMMARY

The present disclosure provides an electrochromic device structure to solve at least the above technical problems existing in the existing art.

According to a first aspect of the present disclosure, an electrochromic device structure is provided. The electrochromic device structure includes a first transparent base layer, a first transparent conductive layer, an electrochromic layer, an electrolyte layer, an ion storage layer, a second transparent conductive layer and a second transparent base layer.

The first transparent base layer is constructed as a flexible substrate.

The first transparent conductive layer is located on a top surface of the first transparent base layer.

The electrochromic layer is located on a top surface of the first transparent conductive layer.

The electrolyte layer is located on a top surface of the electrochromic layer.

The ion storage layer is located on a top surface of the electrolyte layer.

The second transparent conductive layer is located on a top surface of the ion storage layer.

The second transparent base layer is located on a top surface of the second transparent conductive layer and is constructed as a flexible substrate.

The electrochromic layer and the ion storage layer are configured to exhibit a change involving superposition of at least two colors under an action of a voltage.

In an embodiment, the electrochromic layer includes a first electrochromic layer and a second electrochromic layer overlaid on a top surface of the first electrochromic layer.

In an embodiment, an overall thickness of the first electrochromic layer and the second electrochromic layer is 200-1600 nm.

In an embodiment, the ion storage layer is constructed as a NiO composite film with a three-dimensional network porous structure.

In an embodiment, the electrolyte layer is constructed as a lithium nickel tungstate electrolyte layer, and the lithium nickel tungstate electrolyte layer is prepared by an interfacial reaction between a WO₃ composite electrochromic thin film layer and lithium ions of a lithium-ion solid-electrolyte thin film deposited on a top surface of the NiO composite film.

In an embodiment, a radius dimension of the lithium ions is less than a radius dimension of pores of the NiO composite film.

In an embodiment, each of the first transparent base layer and the second transparent base layer is constructed as one of ultra-thin transparent glass, polyimide, or polyethylene terephthalate (PET).

In an embodiment, each of the first transparent conductive layer and the second transparent conductive layer is constructed as one of a transparent indium tin oxide (ITO) conductive layer, a transparent nano-silver conductive layer, or a transparent conductive metal grid.

In an embodiment, the electrochromic device structure further includes a water and oxygen blocking film.

The water and oxygen blocking film is located on a side of the first transparent base layer facing away from air contact; and/or the water and oxygen blocking film is located on a side of the second transparent base layer facing away from air contact.

The electrochromic device structure of the present disclosure includes the first transparent base layer and the second transparent base layer which are the flexible substrates, which can make the entire electrochromic device structure flexible and bendable. In addition, the electrochromic layer and the ion storage layer are configured to exhibit the change involving the superposition of at least two colors, which can make the glass superpose at least two colors under the action of the voltage, thereby superposing the color-changing effects and further enhancing the shielding effect.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The above and other objects, features and advantages of the example embodiments of the present disclosure will become readily understood by reading the following detailed description with reference to the drawings. In the drawings, several embodiments of the present disclosure are shown by way of example and not by way of limitation.

In drawings, the same or corresponding reference numerals indicate the same or corresponding parts.
FIG. 1 illustrates a first layered structure diagram of an electrochromic device structure of an embodiment of the present disclosure.
FIG. 2 illustrates a second layered structure diagram of an electrochromic device structure of an embodiment of the present disclosure.
FIG. 3 illustrates a third layered structure diagram of an electrochromic device structure of an embodiment of the present disclosure.

### Reference list

- 10: electrochromic device structure
- 11: first transparent base layer
- 12: first transparent conductive layer
- 13: electrochromic layer
- 14: electrolyte layer
- 15: ion storage layer
- 16: second transparent conductive layer
- 17: adhesive layer
- 18: second transparent base layer
- 181: water and oxygen blocking film
- 19: sealant

### DETAILED DESCRIPTION

To make the purposes, features, and advantages of the present disclosure more apparent and easier to understand, the technical solutions in the embodiments of the present disclosure are described clearly and completely in conjunction with the drawings in the embodiments of the present disclosure. Apparently, the embodiments described below are part, not all, of the embodiments of the present disclosure. Based on the embodiments described herein, all other embodiments obtained by those skilled in the art without creative work are within the scope of the present disclosure.

For ease of description, spatial relative terms such as "on", "above", "on the upper surface of..." and "upper" may be used herein to describe the spatial positional relationship between one or more components or features and other components or features as illustrated in the drawings. It is to be understood that spatial relative terms include not only the orientations of the components as depicted in the drawings, but also different orientations during use or operation. For example, if a component in the drawings is integrally inverted, the case where a component is "above" or "on" another component or feature includes the case where the component is "below" or "under" another component or structure. Thus, the exemplary term "above" may include both "above" and "below" orientations. In addition, these components or features may also be positioned at other different angles (for example, rotated by 90 degrees or other angles), and the present disclosure is intended to include all these cases.

It is to be noted that the terms used herein are for the purpose of describing embodiments only and are not intended to limit the example embodiments according to the present disclosure. As used herein, unless the context clearly indicates otherwise, the singular forms are intended to include the plural forms as well. In addition, it is also to be understood that when the terms "comprise" and/or "include" are used in this specification, the terms "comprise" and/or "include" indicate the presence of features, steps, operations, components, assemblies and/or combinations thereof.

It is to be noted that terms such as "first" and "second" in the description, claims, and drawings of the present disclosure are used to distinguish between similar objects and are not necessarily used to describe a particular order or sequence. It is to be understood that data used in this manner are interchangeable where appropriate so that the embodiments of the present disclosure described herein are implemented in an order not illustrated or described herein.

In the description of the present disclosure, it is to be understood that the orientations or positional relationships indicated by directional terms are generally based on the orientations or positional relationships shown in the drawings and are only used for the convenience of describing the present disclosure and simplifying the description. In the case of no explanation to the contrary, these directional terms do not indicate or imply that the apparatuses or elements must have a particular orientation or be constructed and operated in a particular orientation. Therefore, these directional terms cannot be understood as a limitation to the scope of the present disclosure. The directional terms "inner" and "outer" refer to the inside and outside relative to the contour of each component itself.

The glass in the electrochromic devices applied at present does not have bendability, resulting in limited application scenarios for the electrochromic devices.

To improve the bendability of the electrochromic device structures, the embodiments of the present disclosure provide an electrochromic device structure. The electrochromic device structure includes, but is not limited to, applications to automotive windows.

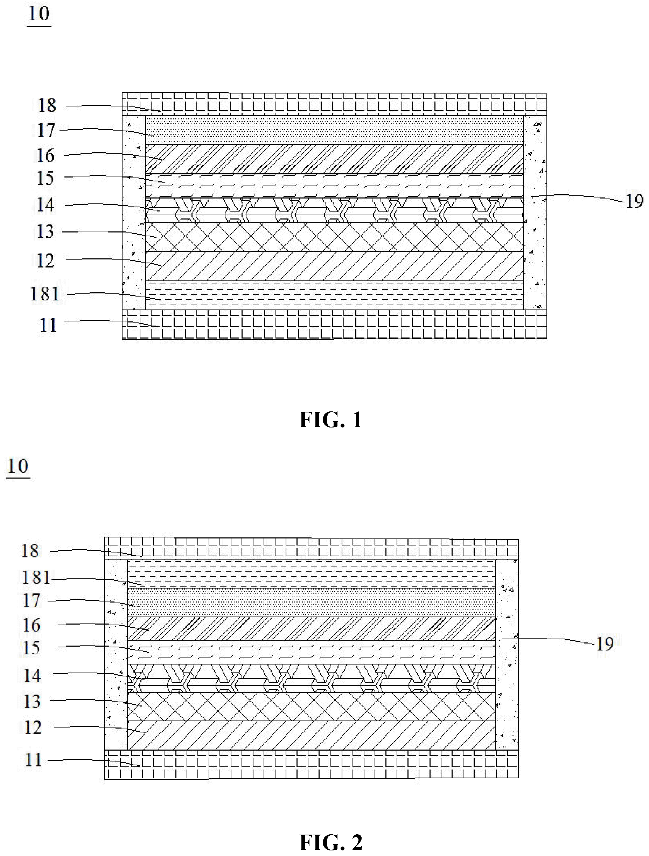

Referring to FIGS. 1 to 3, the electrochromic device structure 10 provided in the embodiments of the present disclosure may include a first transparent base layer 11, a first transparent conductive layer 12, an electrochromic layer 13, an electrolyte layer 14, an ion storage layer 15, a second transparent conductive layer 16 and a second transparent base layer 18 which are disposed in sequence from bottom to top. The first transparent base layer 11 may be constructed as a flexible substrate. The first transparent conductive layer 12 is located on the top surface of the first transparent base layer 11. The electrochromic layer 13 is located on the top surface of the first transparent conductive layer 12. The electrolyte layer 14 is located on the top surface of the electrochromic layer 13. The ion storage layer 15 is located on the top surface of the electrolyte layer 14. The second transparent conductive layer 16 is located on the top surface of the ion storage layer 15. The second transparent base layer 18 is located on the top surface of the second transparent conductive layer 16 and is constructed as a flexible substrate. The electrochromic layer 13 in the embodiments of the present disclosure may be formed through a corresponding deposition process according to actual needs.

Using the electrochromic device structure 10 in the embodiments of the present disclosure, in which the first transparent base layer 11 and the second transparent base layer 18 are the flexible substrates, can make the entire electrochromic device structure 10 flexible and bendable. In addition, the electrochromic layer 13 and the ion storage layer 15 are configured to exhibit a change involving the superposition of at least two colors under the action of a voltage, which can make the glass superpose at least two colors under the action of the voltage, thereby superposing the color-changing effects of at least two colors and further enhancing the shielding effect.

In some embodiments, the electrochromic layer 13 includes a first electrochromic layer 13 and a second electrochromic layer 13 overlaid on the top surface of the first electrochromic layer 13.

The first electrochromic layer 13 may be the same as or different from the second electrochromic layer 13 according to different requirements of structural performance. In this manner, the electrochromic layer 13 in the embodiments of the present disclosure can enhance the color-changing effect of blue light or other colored lights to further achieve the blocking effect of color superposition.

In some embodiments, each of the first electrochromic layer and the second electrochromic layer is constructed as a niobium-containing WO₃ composite cathodic electrochromic thin film layer.

In some embodiments, the overall thickness of the first electrochromic layer and the second electrochromic layer is 200-1600 nm.

In some embodiments, the ion storage layer 15 is constructed as a NiO composite film with a three-dimensional network porous structure. In this manner, the three-dimensional network porous structure of the ion storage layer 15 can provide a migration channel for lithium ions to prepare for lithium-ion migration electrochromism under the action of the voltage.

In some embodiments, the electrolyte layer 14 is constructed as a lithium nickel tungstate electrolyte layer, and the lithium nickel tungstate electrolyte layer is formed by the interfacial reaction between a WO₃ composite electrochromic thin film layer and lithium ions of a lithium-ion solid-electrolyte thin film deposited on the top surface of the NiO composite film. Herein, it is to be pointed out that the lithium ions only need to be present at the surface interface of the WO₃ composite electrochromic thin film layer to react with the WO₃ composite electrochromic thin film layer to obtain the above lithium nickel tungstate electrolyte layer without passing through the WO₃ composite electrochromic thin film layer.

For example, the lithium ions may undergo an oxidation-reduction reaction with the surface interface of the WO₃ composite electrochromic thin film layer during high-temperature treatment.

In some embodiments, the radius dimension of the lithium ions is less than the radius dimension of the pores of the NiO composite film. In this manner, under the action of the applied electric field (that is, the action of the voltage), the lithium ions can pass through the pores and reach the interface where the WO₃ composite electrochromic thin film layer is located. In this case, the color change of yellow light can be achieved.

In some embodiments, each of the first transparent base layer 11 and the second transparent base layer 18 is constructed as one or more of ultra-thin transparent glass, polyimide, or PET. In this manner, the entire electrochromic device can be endowed with flexibility and bendability.

In some embodiments, each of the first transparent conductive layer 12 and the second transparent conductive layer 16 is constructed as one or a combination of a transparent indium tin oxide (ITO) conductive film, a transparent nano-silver conductive layer, or a transparent conductive metal grid.

In some embodiments, the electrochromic device structure 10 further includes a water and oxygen blocking film 181.

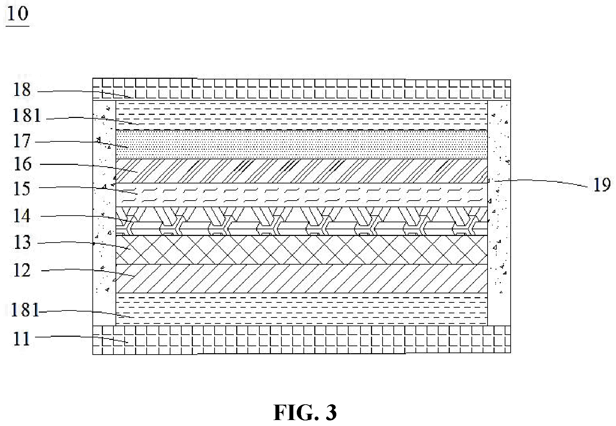

For example, referring to FIG. 1, the water and oxygen blocking film 181 may be located on the side of the first transparent base layer 11 facing away from air contact. Alternatively, for example, referring to FIG. 2, the water and oxygen blocking film 181 may also be located on the side of the second transparent base layer 18 facing away from air contact. Alternatively, for example, referring to FIG. 3, the water and oxygen blocking film 181 is disposed on both the side of the first transparent base layer 11 facing away from the air contact and the side of the second transparent base layer 18 facing away from the air contact. In this manner, the water and oxygen blocking film 181 can further improve the service life of the electrochromic device structure 10 in the embodiments of the present disclosure.

Using the electrochromic device structure 10 in the embodiments of the present disclosure makes the adhesion of the structure of each layer stronger.

For example, the electrochromic device structure 10 in the embodiments of the present disclosure may further include an adhesive layer 17.

For example, referring to FIG. 2, the adhesive layer 17 may be adhered to the side of the second transparent base layer 18 with the water and oxygen blocking film 181. Alternatively, for example, the adhesive layer 17 may be adhered to the side of the first transparent base layer 11 with the water and oxygen blocking film 181, which is not shown in the figure. Alternatively, for example, the adhesive layer 17 is adhered to both the side of the second transparent base layer 18 with the water and oxygen blocking film 181 and the side of the first transparent base layer 11 with the water and oxygen blocking film 181, which is not shown in the figure.

Alternatively, for example, referring to FIG. 3, the first transparent conductive layer 12 may be directly formed on the side of the first transparent base layer 11 with the water and oxygen blocking film 181 through a coating process.

Alternatively, for example, the second transparent conductive layer 16 may also be directly formed on the side of the second transparent base layer 18 with the water and oxygen blocking film 181 through a coating process.

To further obtain the electrochromic device structure 10 in the embodiments of the present disclosure, the electrochromic device structure 10 may be prepared in the following manner.

Exemplarily, for the first transparent base layer 11 in the embodiments of the present disclosure, a SiO₂ substrate layer may be prepared by a reactive magnetron co-sputtering method, using clean substrate glass as the substrate, a high-purity Si target (purity: 99.99%) as the target material, and argon and oxygen as the working gas. The basic parameters are as follows: the background vacuum degree is 6*10-4 Pa, the flow rate ratio of argon to oxygen is 40:7, the working gas pressure is 0.6-1 Pa, a medium-frequency bias voltage is applied, and the sputtering power is DC 150 W. In this manner, a silicon-rich substrate layer is deposited.

Exemplarily, for the first transparent conductive layer 12 in the embodiments of the present disclosure, an ITO transparent conductive film with a film thickness of 20-400 nm may be deposited on the bottom substrate layer using argon and oxygen as the working gas and indium tin oxide ceramic as the target material through a direct current reactive sputtering method. The basic parameters are as follows: the background vacuum degree is 6*10-4 Pa, the flow rate ratio of argon to oxygen is 49.5:0.5, the working gas pressure is 0.3-1.0 Pa, the sputtering power is DC 130 W, and the substrate temperature is room temperature. In this manner, a bottom ITO is formed.

Exemplarily, the electrochromic layer 13 in the embodiments of the present disclosure may use metal tungsten and niobium oxide as the target material and argon and oxygen as working gases. The basic parameters are as follows: the background vacuum degree is 6*10-4 Pa, the flow rate ratio of argon to oxygen is 3:0.8, the working gas pressure is 2-3 Pa, and the sputtering power is DC 220 W. When the substrate temperature is 350°C, the first deposition is performed to obtain a first WO₃ composite electrochromic thin film layer, that is, the first electrochromic layer 13. When the substrate temperature is 20°C, the second deposition is performed to obtain a second WO₃ composite electrochromic thin film layer, that is, the second electrochromic layer 13. Thus, a niobium-containing WO₃ composite cathodic electrochromic thin film layer with a thickness of 200-600 nm is finally obtained.

In the embodiments of the present disclosure, a NiO composite film with a thickness of 100-500 m may be deposited on the top surface of the electrochromic layer 13 using argon as the working gas and niobium oxide composite nickel alloy target material through a reactive sputtering method. The basic parameters are as follows: the background vacuum degree is 6*10-4 Pa, the flow rate ratio of argon to methane is 50:1, the working gas pressure is 0.6-1 Pa, the sputtering power is DC 300 W, and the substrate temperature is 300°C. Then, a solid-electrolyte thin film with a thickness of 50-100 nm is deposited on the NiO composite film using argon and oxygen as the working gas and a lithium target material. The basic parameters are as follows: the background vacuum degree is 6*10-4 Pa, the flow rate ratio of argon to oxygen is 5:0.2, the working gas pressure is 2-3 Pa, and the substrate temperature is 100-200°C. The film structure formed at this time is not an inorganic electrolyte layer. The WO₃ composite electrochromic thin film layer formed in the electrochromic layer 13 has a dense structure at the interface, and the NiO composite film formed in the ion storage layer 15 has a three-dimensional network porous structure. The radius of the pores is greater than the radius of the lithium ions so that the lithium ion can easily pass through the NiO composite film layer and enter the interface of the formed WO₃ composite electrochromic thin film layer. Through a high-temperature annealing with 350-450°C at this interface layer, the lithium nickel tungstate electrolyte layer with a thickness of 10-150 nm is formed by the lithium ions and the WO₃ composite electrochromic thin film layer. This layer is the electrolyte layer 14 of the electrochromic device structure 10.

Exemplarily, for the second transparent conductive layer 16 in the embodiments of the present disclosure, an ITO transparent conductive film with a film thickness of 20-400 nm may be deposited on the ion storage layer 15 using argon and oxygen as the working gases and an indium tin oxide ceramic target material through a direct current reactive sputtering method. The basic parameters are as follows: the background vacuum degree is 6*10-4 Pa, the flow rate ratio of argon to oxygen is 49.5:0.5, the working gas pressure is 0.3-1.0 Pa, the sputtering power is DC 130 W, and the substrate temperature is room temperature. In this manner, the top ITO is formed.

Exemplarily, for the second transparent base layer 18 in the embodiments of the present disclosure, a SiO₂ substrate layer may be prepared by a reactive magnetron co-sputtering method, using the above-mentioned coated glass as the substrate, a high-purity Si target (purity: 99.99%) as the target material, and argon and oxygen as the working gas. The basic parameters are as follows: the background vacuum degree is 6*10-4 Pa, the flow rate ratio of argon to oxygen is 40:7, the working gas pressure is 0.6-1 Pa, a medium-frequency bias voltage is applied, and the sputtering power is DC 150 W. In this manner, a silicon-rich substrate layer is deposited.

For example, after an electrode of the electrochromic device prepared in the above steps is made through laser and silk printing processes, the electrode is laminated and encapsulated with the second transparent base layer 18 (an organic transparent substrate, for example, colorless polyimide (CPI) or PET) with the water and oxygen blocking film 181 through a vacuum lamination process. In particular, a sealant 19 is encapsulated between the second transparent base layer 18 and the first transparent base layer 11 (functional films at an encapsulation position between the two transparent substrates are removed by laser) instead of being encapsulated on the films. This structure can make the sealant 19 adhere more securely and tightly to the two substrates, thereby enhancing the adhesion and sealing performance of the sealant 19.

For example, the water and oxygen blocking layer of the second transparent base layer 18 may be one or a multi-layer combination of SiO₂, Al₂O₃, or organic acrylate.

It is to be understood that various forms of the preceding flows may be used with steps reordered, added, or deleted. For example, the steps described in the present disclosure may be executed in parallel, in sequence, or in a different order as long as the desired results of the technical solutions of the present disclosure can be achieved. The execution sequence of these steps is not limited herein.

Moreover, terms like "first" and "second" are only for description and are not to be construed as indicating or implying relative importance or implicitly indicating the number of technical features as indicated. Therefore, a feature defined as a "first" feature or a "second" feature may expressly or implicitly include at least one this feature. As used herein, the term "plurality" is defined as two or more, unless otherwise expressly specified and limited.

The above are just specific embodiments of the present disclosure and are not intended to limit the scope of the present disclosure. It is easy for those skilled in the art to conceive modifications or substitutions within the scope of the present disclosure. These modifications or substitutions are within the scope of the present disclosure. Therefore, the scope of the present disclosure is subject to the scope of the appended claims.

## Claims

1. An electrochromic device structure, comprising:
a first transparent base layer constructed as a flexible substrate;
a first transparent conductive layer located on a top surface of the first transparent base layer;
an electrochromic layer located on a top surface of the first transparent conductive layer;
an electrolyte layer located on a top surface of the electrochromic layer;
an ion storage layer located on a top surface of the electrolyte layer;
a second transparent conductive layer located on a top surface of the ion storage layer; and
a second transparent base layer, wherein the second transparent base layer is located on a top surface of the second transparent conductive layer and is constructed as a flexible substrate;
wherein the electrochromic layer and the ion storage layer are configured to exhibit a change involving superposition of at least two colors under an action of a voltage.

2. The electrochromic device structure according to claim 1, wherein the electrochromic layer comprises a first electrochromic layer and a second electrochromic layer overlaid on a top surface of the first electrochromic layer.

3. The electrochromic device structure according to claim 2, wherein an overall thickness of the first electrochromic layer and the second electrochromic layer is 200-1600 nm.

4. The electrochromic device structure according to claim 1, wherein the ion storage layer is constructed as a NiO composite film with a three-dimensional network porous structure.

5. The electrochromic device structure according to claim 4, wherein the electrolyte layer is constructed as a lithium nickel tungstate electrolyte layer, and the lithium nickel tungstate electrolyte layer is formed by an interfacial reaction between a WO₃ composite electrochromic thin film layer and lithium ions of a lithium-ion solid-electrolyte thin film deposited on a top surface of the NiO composite film.

6. The electrochromic device structure according to claim 5, wherein a radius dimension of the lithium ions is less than a radius dimension of pores of the NiO composite film.

7. The electrochromic device structure according to claim 1, wherein each of the first transparent base layer and the second transparent base layer is constructed as one of ultra-thin transparent glass, polyimide, or polyethylene terephthalate, PET.

8. The electrochromic device structure according to claim 1, wherein each of the first transparent conductive layer and the second transparent conductive layer is constructed as one of a transparent indium tin oxide, ITO, conductive layer, a transparent nano-silver conductive layer, or a transparent conductive metal grid.

9. The electrochromic device structure according to claim 1, further comprising a water and oxygen blocking film;
wherein the water and oxygen blocking film is located on a side of the first transparent base layer facing away from air contact; and/or
the water and oxygen blocking film is located on a side of the second transparent base layer facing away from air contact.
